# EUROPÄISCHE PATENTSCHRIFT

(11) **EP 1 397 190 B1**
(45) Veröffentlichungstag und Bekanntmachung des Hinweises auf die Patenterteilung: **26.04.2006**
(21) Anmeldenummer: 02730282.7
(22) Anmeldetag: 27.05.2002
(51) Int. Cl.: B01D 33/21, B01D 33/68

(54) **SORTIER- BZW. FILTRIERVORRICHTUNG FÜR MEHRPHASENGEMISCHE**
GRADING OR FILTRATION DEVICE FOR MULTI-PHASE MIXTURES
DISPOSITIF DE TRIAGE ET DE FILTRAGE DE MELANGES MULTIPHASES

(30) Priorität: 19.06.2001 AT 9472001
(43) Veröffentlichungstag der Anmeldung: 17.03.2004
(73) Patentinhaber: Andritz AG, 8045 Graz (AT)
(72) Erfinder: GABL, Helmuth, A-8046 Graz (AT)
(74) Vertreter: Schweinzer, Friedrich
(86) Internationale Anmeldenummer: PCT/EP2002/005780
(87) Internationale Veröffentlichungsnummer: WO 2002/102491

(56) Entgegenhaltungen:
- DE-A- 2 251 021
- DE-A- 10 019 674
- DE-A- 19 502 848
- FR-A- 912 116
- US-A- 5 638 960
- US-A- 5 820 756
- PATENT ABSTRACTS OF JAPAN vol. 017, no. 674 (C-1140), 10. Dezember 1993 (1993-12-10) & JP 05 220499 A (HITACHI PLANT ENG & CONSTR CO LTD), 31. August 1993 (1993-08-31)
- PATENT ABSTRACTS OF JAPAN vol. 018, no. 371 (C-1224), 13. Juli 1994 (1994-07-13) -& JP 06 099041 A (HITACHI PLANT ENG & CONSTR CO LTD), 12. April 1994 (1994-04-12)
- PATENT ABSTRACTS OF JAPAN vol. 1995, no. 06, 31. Juli 1995 (1995-07-31) & JP 07 075722 A (AGENCY OF IND SCIENCE & TECHNOL;OTHERS: 01), 20. März 1995 (1995-03-20)

## Beschreibung

Die Erfindung betrifft eine Sortier- bzw. Filtriervorrichtung für Mehrphasengemische, insbesondere Flüssigkeiten mit darin enthaltenen Faserstoffen, umfassend ein Gehäuse mit zumindest einer Zuleitung, zumindest einer Ableitung für die behandelte Flüssigkeit, zumindest einer Ableitung für das Retentat bzw. die Störstoffe und zumindest einer von der Flüssigkeit durchströmten Filter- bzw. Sortierfläche, deren Rückseite mit der Ableitung für die behandelte Flüssigkeit verbunden ist, wobei Einrichtungen zur Erzeugung einer definierten Strömungscharakteristik an der von der Flüssigkeit angeströmten Filter- bzw. Sortiertläche vorgesehen sind, wobei die Filter- bzw. Sortierfläche durch zumindest eine im wesentlichen starre Deckfläche zumindest einer im wesentlichen kreisförmigen, um eine im wesentlichen zentrale Achse drehbaren Filterscheibe mit hohlem Innenraum gebildet ist, welcher Innenraum mit der Ableitung für die behandelte Flüssigkeit verbunden ist, dass zumindest zwei, vorzugsweise mehrere, Filterscheiben parallel zueinander auf der selben Achse angeordnet sind und dass zumindest ein weiteres Element unmittelbar benachbart der Filter- bzw. Sortierfläche vorgesehen ist, wobei weiters Führungs- und Antriebseinrichtungen vorgesehen sind, welche dieses Element und die Filterscheibe eine Relativbewegung zueinander parallel zur Ebene der Filter scheibe ausführen lassen. Die Erfindung betrifft auch eine Sortier- bzw. Filtrieranlage.

Bislang wurde zur Sortierung von Mehrphasengemischen Vorrichtungen eingesetzt, die als aktive Anlagenteile rotierende Siebkörbe oder Rotoren aufweisen, welche Siebkörbe beispielsweise aus Lochblechen oder aus einer Vielzahl von Stäben mit den unterschiedlichsten Loch- oder Schlitzdurchmessem und Oberflächengeometrien aufgebaut sein können. Weiters sind z.B. aus der DE 195 02 848 Rotationsspaltfilter bekannt, bei denen Flüssigkeiten mittels rotierender Membranfilterscheiben in Retentat und Filtrat aufgeteilt werden. Ein derartiges Filter kann aber bei Flüssigkeiten mit Feststoffen, die getrennt werden sollen nicht eingesetzt werden, da es von den Feststoffen sofort zugelegt wäre und damit keinerlei Trennwirkung und Filtrierleistung mehr erreicht würde.

Die Aufgabe der Erfindung bestand in einer vorteilhaften Ausgestaltung einer Sortier- und Filtriervorrichtung, die eine verbesserte und einfachst skalierbare Sortier- bzw. Filtrierleistung bei sowohl apparativ, verfahrenstechnisch als auch aufwandsmäßig geringstmöglichem Aufwand ermöglicht, sowie in einer diese Vorteile realisierenden Anlage.
Zur Lösung dieser Aufgabe ist erfindungsgemäß vorgesehen, dass auf der äußeren Oberfläche der Filter- bzw. Sortierfläche Leisten oder Nuten vorgesehen bzw. ausgearbeitet sind. Durch die erfindungsgemäß angeordneten Leisten oder Nuten lässt sich die gewünschte Strömungscharakteristik, insbesondere in Hinblick auf die gewünschte Selbstreinigung genauer anpassen und verbessem. Auch ergibt sich eine verbesserte Sortierleistung, da die größeren Teile von der Oberfläche ferngehalten und nur die kleineren Teile zur Oberfläche und durch diese hindurchgelassen werden. Diese Leisten oder Nuten können je nach gewünschter Strömungscharakteristik, auch abhängig von den zu trennenden Phasen und Stoffen, unterschiedlich geformt sein.

Wenn gemäß einer vorteilhaften Ausführungsform zumindest zwei, vorzugsweise mehrere, Filterscheiben parallel zueinander auf der selben Achse angeordnet sind, kann durch Vergrößerung in lediglich einer Dimension eine Erhöhung der Sortier- bzw. Filterfläche und damit auch des Durchsatzes der Vorrichtung erzielt werden.

Wenn dabei die Filterscheiben im wesentlichen waagerecht angeordnet sind und allenfalls um eine im wesentlichen vertikal orientierte Achse drehbar sind, kann die Flächenvergrößerung bei gleicher Bodenfläche erzielt werden.

Gemäß einer ersten Ausführungsform der Erfindung kann das zumindest eine weitere Element durch zumindest eine weitere Filterscheibe, vorzugsweise durch mehrere auf einer gemeinsamen Achse gelagerten Filterscheiben gebildet und feststehend montiert und oder rotierend ausgeführt sein.

Selbstverständlich sind auch Ausführungen denkbar, bei welchen sowohl das zumindest eine weitere Element als auch die bzw. jede Filterscheibe relativ zueinander bewegbar gelagert sind.

Die eben genannten Vorteile bei geringst möglichem Bauvolumen zu erzielen, kann gemäß einem weiteren Merkmal der Erfindung vorgesehen sein, dass zumindest zwei Stapel von übereinander beabstandet angeordneten und auf parallelen, aber voneinander radial beabstandeten Achsen angeordneten Filterscheiben vorgesehen sind, wobei die Filterscheiben eines Stapels in den Zwischenräumen zwischen der Filterscheiben des anderen Stapels liegen, wobei die Stapel einander in Richtung der Achsen gesehen überschneiden und wobei zumindest einer der Stapel von übereinander angeordneten Filterscheiben um seine Achse drehbar ist.

Wenn bei einer bevorzugten Ausführungsform der Erfindung die Filterscheiben durch Lochbleche mit K-Profil gebildet sind, kann dadurch die Verstopfungsneigung gering gehalten werden.

Die erfindungsgemäße Anlage ist, um unterschiedliche Screening-Stufen zu bieten und in einfacher Weise Mehrstufenbehandlungen vornehmen zu können, ,dadurch gekennzeichnet, dass zumindest zwei Vorrichtungen gemäß einem der vorhergehenden Ansprüche vorgesehen sind, wobei die Ableitung einer Vorrichtung mit der Zuleitung zumindest einer nachgeschalteten zweiten Vorrichtung verbunden ist und wobei der wirksame Durchmesser der Öffnungen in den Sortier- bzw. Filtrierflächen in beiden Vorrichtungen verschieden, vorzugsweise in der jeweils nachgeschalteten Vorrichtung kleiner als in der vorhergehenden Vorrichtung, ist.

In der nachfolgenden Beschreibung soll die Erfindung anhand der beigefügten Zeichnungen näher erläutert werden. Dabei zeigt die Fig. 1 eine schematische Seitenansicht einer bevorzugten Ausführungsform der erfindungsgemäßen Sortier- und Filtriervorrichtung, Fig. 2 ist eine Draufsicht auf eine andere Ausführungsform der erfindungsgemäßen Sortier- und Filtriervorrichtung, Fig. 3 zeigt einen Schnitt durch eine Hälfte einer Filterscheibe, Fig. 4 ist eine Schnittansicht durch eine Durchgangsöffnung in der Filterscheibe gemäß einer ersten vorteilhaften Ausgestaltung, Fig. 5a und 5b sind Schnitt- bzw. perspektivische Ansichten von Oberflächenbereichen bzw. Durchgangsöffnungen gemäß anderen Ausgestaltungen, und Fig. 6 zeigt einen schematischen Querschnitt durch erfindungsgemäße Vorrichtung mit spezieller Ausführungsform des Gehäuses.

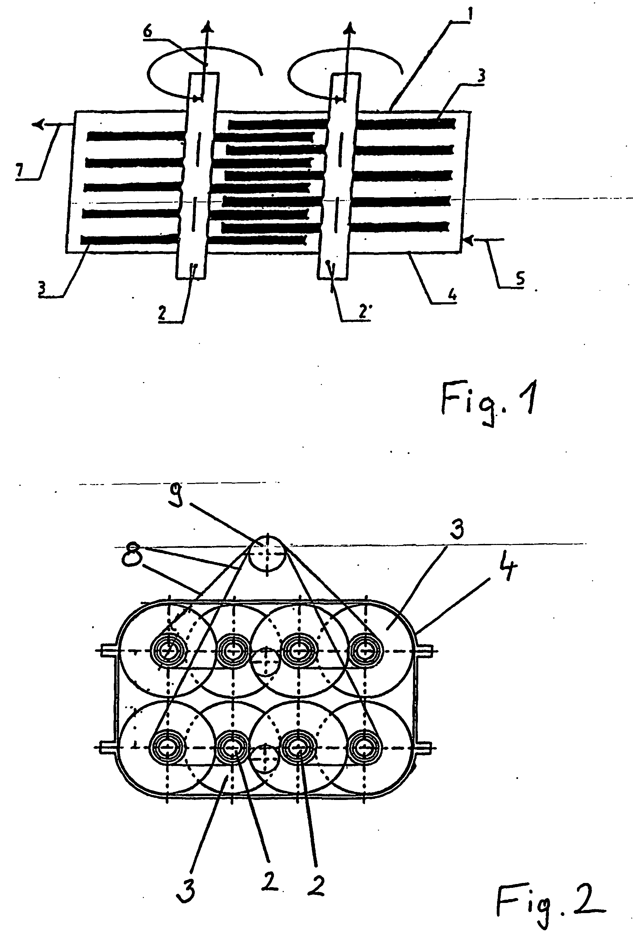

Die beispielhaft dargestellte Sortier- bzw. Filtriervorrichtung 1 der Fig. 1 weist mehrere hohle Wellen 2, 2' auf, auf welchen vorzugsweise vertikalen Wellen 2, 2' jeweils mehrere Filterscheiben 3 übereinander und voneinander um mehr als die Scheibendicke beabstandet befestigt sind. Das zu behandelnde, üblicherweise als wässrige Suspension vorliegende Mehrphasengemisch wird über zumindest eine Zuleitung 5 in das die Filterscheiben 3 beherbergende Gehäuse 4 eingeleitet, das offen aber auch geschlossen, z.B. als Druckgefäß, ausgeführt sein kann. Im Gehäuse 4 wird ein Niveau des Gemisches eingestellt, bei welchem alle Filterscheiben 3 vollständig eingetaucht sind. Das durch die aktiven Filter- bzw. Sortierflächen der Filterscheiben 3 hindurchtretende Medium gelangt in das Innere der hohlen Wellen 2, 2' und wird daraus über Leitungen 6 aus dem Gehäuse 4 abgeleitet, während das Retentat bzw. die Störstoffe über eine Ableitung 7 aus dem Gehäuse 4 geführt werden. Je nach den rheologischen Eigenschaften der zu behandelnden Suspension, der Art der Inhaltsstoffe und der Strömungsverhältnisse - welche u.a. auch von der Bewegung von Sortierscheiben 3 und der Zusatzelemente, vorzugsweise den anderen Scheiben 3 und deren Oberflächenbeschaffenheit abhängt - wird die Rejektabführung meist am Bodenteil der Vorrichtung erfolgen. Um die Strömungsführung vorteilhafterweise verspinnungsfrei, ohne Turbulenzen und mit möglichst kurzen Ausschleusungswegen für das Retentat zu ermöglichen, kann die Abführung aber auch seitlich oder im oberen Bereich, vorzugsweise mittig über der Anlage, erfolgen.

In Fig. 1 ist eine Vorrichtung dargestellt, bei welcher zwei Stapel von übereinander beabstandet angeordneten Sortier- bzw. Filterscheiben 3 vorgesehen sind, welche auf parallelen, aber voneinander radial beabstandeten Hohlwellen 2, 2' befestigt sind, wobei der Abstand der Hohlwellen 2, 2' derart bemessen ist, dass die Filterscheiben eines Stapels in den Zwischenräumen zwischen der Filterscheiben des anderen Stapels liegen. Die beiden Stapel von Sortier- bzw. Filterscheiben 3 überschneiden einander in Richtung der Wellen 2, 2' gesehen und zumindest einer der Stapel, vorzugsweise beide Stapel sind um die von der jeweiligen Hohlwelle 2, 2' gebildeten Achse drehbar. Eine erfindungsgemäße Vorrichtung mit insgesamt acht Stapeln von Filterscheiben 3 ist in Fig. 2 beispielhaft dargestellt, die in zwei Reihen zu jeweils vier Stapeln aufgeteilt sind, von welchen sich die jeweils benachbarten Stapel jeder Reihe überschneiden. Weiters sind in Fig. 2 die über vorzugsweise alle Wellen 2 laufenden Antriebsriemen erkennbar, über welche die Wellen 2 von einem Motor 9 in Drehung versetzt werden können.

Die Sortier- bzw. Filterscheiben 3 weisen, wie in Fig. 3 schematisch gezeigt, zylindrischen Querschnitt auf und besitzen zumindest eine im wesentlichen starre Deckfläche 10 als Sortier- bzw. Filtrierfläche, vorzugsweise ist auch die gegenüberliegende Deckfläche 11 starr und kann allenfalls ebenfalls als Sortier- bzw. Filtrierfläche genutzt werden. Die Mantelfläche 12 ist undurchlässig und vorteilhafterweise ist das Innere 13 der Scheibe 3 frei von Einbauten wie Stütz- oder Abstandhalter-Elementen, so dass neben dem einfacheren Aufbau bessere hydraulische Bedingungen -vorliegen und das Abfließen des die Sortier- bzw. Filtrierfläche 10 passierenden Mediums zum Zentrum der Scheibe 3 hin und weiter in die hohle Welle 2 nicht behindert wird. Zudem verringert sich die Anfälligkeit gegen Bakterien- und Keimwachstum.

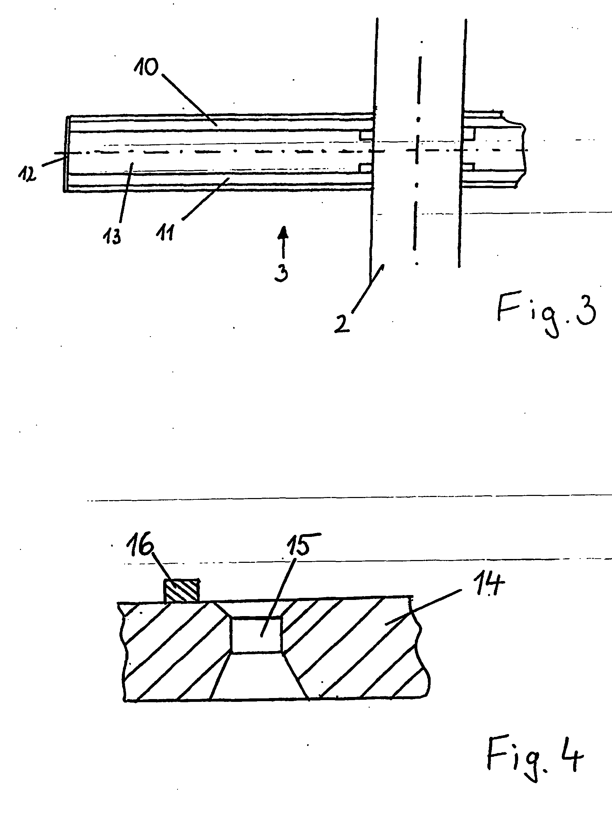

Die starre Deckfläche 10 bzw. jede aktive Sortier- bzw. Filtrierfläche ist gemäß einer bevorzugten Ausführungsform durch Lochbleche 14 mit K-Profil gebildet, dessen Durchtrittsöffnungen 15 eine sehr geringe Verstopfungsneigung aufweisen. Die Blechstärke wird typischerweise im Bereich von 1 bis 6 mm liegen, vorzugsweise zwischen 2 und 5 mm. Doch auch Kunststoff, Keramik oder Verbundmaterial ist als Material für die Scheiben 3 bzw. die Sortier- bzw. Filtrierfläche 10 möglich, alle Materialien allenfalls auch durch z.B. Chromieren, Nitrieren usw. mit Beschichtungen versehen. Ein Beispiel dafür ist in Fig. 4 dargestellt. Weiters ist auf der äußeren Oberfläche der Filter- bzw. Sortierfläche 10 auf einer Seite der Durchtrittsöffnung 15 eine Leiste 16 vorgesehen, die je nach Ausgestaltung die Strömungscharakteristik über der Oberfläche beeinflusst.

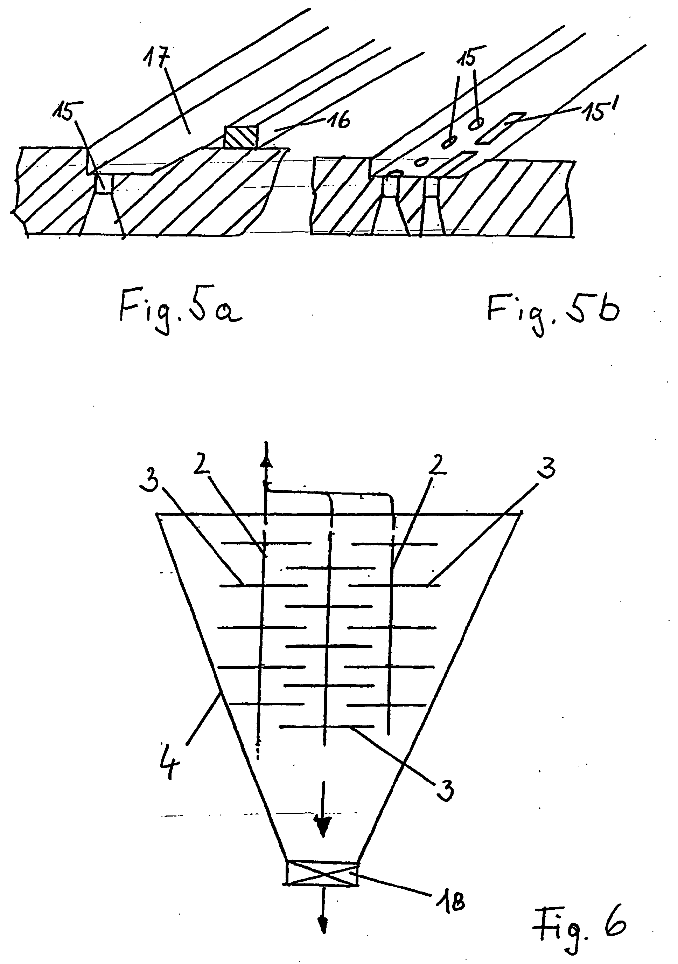

In den Fig. 5a und 5b sind beispielhaft weitere Ausführungsformen für die Oberflächengestaltung der Sortier- bzw. Filtrierflächen dargestellt. So können die Durchtrittsöffnungen 15 auch am Boden einer in der Oberfläche der Scheiben 3 ausgearbeiteten Nut 17 vorgesehen sein, welche allenfalls hinter einer Leiste 16 liegen kann. Die Durchtrittsöffnungen 15 selbst können in unterschiedlichen Formen vorliegen, beispielsweise als kreisförmige Öffnungen oder als Schlitze 15'. Der genaue Verlauf und die Form der Leisten 16, Nuten 17, Öffnungen 15 und allfälliger weiterer Zusatzaufbauten kann je nach gewünschter Anströmungscharakteristik und Verwirbelung über der Sortier- bzw. Filtrierfläche 10 oder zwischen den einzelnen Scheiben 3 der einander überschneidenden Stapel gewählt bzw. daraufhin ausgelegt werden. Vorteilhaft ist in jedem Fall der in den Zeichnungen dargestellte Querschnittsverlauf der Durchtrittsöffnungen 15, von der angeströmten Oberfläche 10 ausgehend zuerst konstant, dann sich erweiternd, um einer allfälligen Verstopfung entgegenzuwirken.

Zur gewünschten Strömungscharakteristik über der aktiven Oberfläche 10 der Sortier- bzw. Filterscheiben 3 trägt vorzugsweise die Relativbewegung der Scheiben 3 der einander überschneidenden Stapel bei, sie kann aber anstelle durch die Scheiben eines benachbarten Stapels von Filterscheiben 3 auch durch nicht für die Sortierung bzw. Filtrierung aktive Elemente, beispielsweise Störleisten, Störstäbe, Flügel oder gleichartige Elemente bewirkt werden, die feststehend oder beweglich im Gehäuse 4 vorgesehen sein können, solange nur die Relativbewegung gegenüber den ebenfalls feststehend oder drehbar gelagerten Filterscheiben 3 sichergestellt ist. Prinzipien können die Elemente zur Verwirbelung bzw. Strömungsbeeinflussung beliebiges Aussehen und Oberflächengestaltung aufweisen, allenfalls auch unregelmäßig geformt sein. Ein zusätzlicher Vorteil der Strömungsbeeinflussung über den Oberflächen der Filtrier- bzw. Sortierscheiben 3 ist auch die Selbstreinigungswirkung, die ebenfalls die Verstopfungsgefahr wesentlich vermindert. Eine weitere Möglichkeit zur Reinigung der Vorrichtung ist aber auch die Rückspülung mit Akzeptflüssigkeit.

Eine besonders vorteilhafte Form des Gehäuses 4 ist in Fig. 6 schematisch im Querschnitt dargestellt. Für vertikale Wellen 2, auf denen die Sortier- bzw. Filtrierscheiben 3 horizontal ausgerichtet angebracht sind, kann ein Gehäuse 4 mit nach unten hin zusammenlaufenden Seitenallenfalls auch Stimwänden vorgesehen sein, was das Abziehen des Retentates und/oder der Störstoffe erleichtert, die im trichterförmigen Unterteil des Gehäuses 4 gesammelt werden und über eine herkömmliche Austragseinrichtung 18 aus dem Gehäuse 4 abgezogen werden können.

Selbstverständlich können auch zwei oder mehrere Sortier- bzw. Filtrieranlagen in Serie oder parallel geschaltet sein. Die Serienschaltung, wobei die Ableitung einer Vorrichtung mit der Zuleitung zumindest einer nachgeschalteten zweiten Vorrichtung verbunden ist, kann zur Sortierung in mehrere Größenklassen der Störstoffe eingesetzt werden, wenn der wirksame Durchmesser der Öffnungen in den Sortier- bzw. Filtrierflächen in beiden Vorrichtungen verschieden, vorzugsweise in der jeweils nachgeschalteten Vorrichtung kleiner als in der vorhergehenden Vorrichtung, ist.

## Patentansprüche

1. Sortier- bzw. Filtriervorrichtung für Mehrphasengemische, insbesondere Flüssigkeiten mit darin enthaltenen Faserstoffen, umfassend ein Gehäuse mit zumindest einer Zuleitung, zumindest einer Ableitung für die behandelte Flüssigkeit, zumindest einer Ableitung für das Retentat bzw. die Störstoffe und zumindest einer von der Flüssigkeit durchströmten Filter- bzw. Sortierfläche, deren Rückseite mit der Ableitung für die behandelte Flüssigkeit verbunden ist, wobei Einrichtungen zur Erzeugung einer definierten Strömungscharakteristik an der von der Flüssigkeit angeströmten Filter- bzw. Sortierfläche vorgesehen sind, wobei die Filter- bzw. Sortierfläche durch zumindest eine im wesentlichen starre Deckfläche (10) zumindest einer im wesentlichen kretsförmigen, um eine im wesentlichen zentrale Achse (2, 2') drehbaren Filterscheibe (3) mit hohlem Innenraum gebildet ist, welcher Innenraum mit der Abteltung für die behandelte Flüssigkeit verbunden ist, dass zumindest zwei, vorzugsweise mehrere, Filterscheiben (3) parallel zueinander auf der selben Achse (2, 2') angeordnet sind und dass zumindest ein weiteres Element unmittelbar benachbart der Filter- bzw. Sortierfläche vorgesehen ist, wobei weiters Fuhrüngs- und Antriebseinrichtungen vorgesehen sind, welche dieses. Element und die Filterscheibe (3) eine Relativbewegung zueinander parallel zur Ebene der Filterscheibe (3) ausführen lassen, **dadurch gekennzeichnet, dass** auf der äußeren Oberfläche (10) der Filter- bzw. Sortierfiache Leisten (16) oder Nuten (17) vorgesehen bzw. ausgearbeitet sind.

2. Vorrichtung nach Anspruch 1, **dadurch gekennzeichnet, dass** das zumindest eine weitere Element durch zumindest eine weitere Filterscheibe (3), vorzugsweise durch mehrere auf einer gemeinsamen Achse (2, 2') gelagerten Filterscheiben (3), gebildet ist und feststehend oder rotierend ausgeführt sein kann.

3. Vorrichtung nach Anspruch 2, **dadurch gekennzeichnet, dass** zumindest zwei Stapel von übereinander beabstandet angeordneten und auf parallelen, aber voneinander radial beabstandeten Achsen (2, 2') angeordneten Filterscheiben (3) vorgesehen sind, wobei die Filterscheiben (3) eines Stapels in den Zwischenräumen zwischen der Filterscheiben (3) des anderen Stapels liegen, wobei die Stapel einander in Richtung der Achsen (2, 2') gesehen überschneiden und wobei zumindest einer der Stapel von übereinander angeordneten Filterscheiben (3) um seine Achse (2, 2') drehbar ist.

4. Vorrichtung nach einem der Ansprüche 1 bis 3, **dadurch gekennzeichnet, dass** die Filterscheiben (3) durch Lochbleche (14) mit K-Profil gebildet sind.

5. Sortier- bzw. Filtrieranlage mit zumindest zwei Vorrichtungen gemäß einem der vorhergehenden Ansprüche, **dadurch gekennzeichnet, dass** die Ableitung einer Vorrichtung mit der Zuleitung zumindest einer nachgeschalteten zweiten Vorrichtung verbunden ist und wobei der wirksame Durchmesser der Öffnungen in den Sortier- bzw. Filtrierflächen in der jeweils nachgeschalteten Vorrichtung kleiner als in der vorhergehenden Vorrichtung, ist.

## Claims

1. Screening or filtration device for multi-phase mixtures, particularly liquids containing fibres, comprising a casing with at least one feed pipe, at least one discharge pipe for the liquid treated, at least one discharge pipe for the retentate or impurities, and at least one filter or screening area through which the liquid flows and the rear side of which is connected to the discharge pipe for the liquid treated, with devices being provided to generate defined flow characteristics at the filter or screening area to which the liquid flows, where the filter or screening area is formed at least by one essentially rigid top surface (10) of at least one essentially circular filter disc (3) with hollow interior that can be rotated round an essentially central axis (2, 2'), which interior is connected to the discharge pipe for the liquid treated, where at least two, preferably several, filter discs (3) being arranged in parallel on the same axis (2, 2') and at least one further element being arranged immediately neighbouring the filter or screening area, with guidance and drive units being also provided which cause this element and the filter disc (3) to perform a relative movement to each other in parallel to the filter disc (3) plane, **characterised by** strips (16) or grooves (17) being provided or formed on the outer surface (10) of the filter or screening area.

2. Device according to Claim 1, **characterised by** the, at least one, further element being formed by at least one further filter disc (3), preferably by several filter discs (3) mounted on a common axis (2, 2') and by being either fixed or rotating.

3. Device according to Claim 2, **characterised by** at least two stacks of filter discs (3) mounted at a set distance one above the other and on parallel axes (2, 2') with radial spacing to one another being provided, where the filter discs (3) of one stack are positioned in the spaces between the filter discs (3) of the other stack, where the stacks overlap one another viewed in the direction of the axes (2, 2'), and where at least one of the stacks of filter discs (3) mounted one above the other can be rotated round its own axis (2, 2').

4. Device according to one of Claims 1 to 3, **characterised by** the filter discs (3) being formed by perforated plates (14) with a K profile.

5. Screening or filtration plant with at least two devices according to one of the preceding claims, **characterised by** the discharge pipe from one device being connected to the feed of at least one second device downstream thereof, and where the effective diameter of the perforations in the screening or filtration areas is smaller in the downstream device than in the device preceding it.

## Revendications

1. Dispositif de classification ou de filtration pour mélanges multi-phasés, surtout des liquides contenant des fibres, comprenant un carter avec au moins un tuyau d'alimentation, au moins un tuyau de décharge pour le liquide traité, au moins un tuyau de décharge pour le rétentat ou pour les impuretés, et au moins une aire filtrante ou classifiante à travers laquelle le liquide passe, et dont le revers est connecté au tuyau de décharge du liquide traité, avec des dispositifs pour créer une caractéristique de courant sur l'aire filtrante ou classifiante à laquelle le liquide afflue, l'aire filtrante ou classifiante étant formée par au moins une surface essentiellement rigide (10) d'au moins un disque filtrant essentiellement circulaire (3) mobile sur un axe essentiellement central avec intérieur creux, cet intérieur étant connecté au tuyau de décharge pour le liquide traité, où au moins deux, de préférence plusieurs, disques filtrants (3) sont disposés parallèlement sur le même axe (2, 2') et au moins un élément supplémentaire est disposé immédiatement voisin de l'aire filtrante ou classifiante, des unités de guidage et d'actionnement sont en outre prévues qui font faire à cet élément et le disque filtrant (3) un mouvement relatif l'un à l'autre en parallèle au plan du disque filtrant (3), **caractérisé en ce que** des listeaux (16) ou rainures (17) sont prévus ou formés sur la surface extérieure (10) de l'aire filtrante ou classifiante.

2. Dispositif selon la revendication 1, **caractérisé en ce que** l'élément supplémentaire, dont il y au moins un, est formé par au moins un disque filtrant (3) supplémentaire, de préférence par plusieurs disques filtrants (3) monté(s) sur un axe commun (2, 2') et peut être fixe ou rotatif.

3. Dispositif selon la revendication 2, **caractérisé en ce qu'**au moins deux piles de disques filtrants (3) superposés avec un certain écart et montés sur des axes parallèles (2, 2') à distance radiale sont prévus, les disques filtrants (3) d'une pile étant posés dans les espaces intermédiaires entre les disques filtrants (3) de l'autre pile, les piles, vues dans la direction des axes (2, 2'), se croisant, et au moins une des piles des disques filtrants (3) superposés étant mobile autour de son axe (2, 2').

4. Dispositif selon l'une des revendications 1 à 3, **caractérisé en ce que** les disques filtrants (3) sont constitués de tôles perforés (14) avec profile en K.

5. Dispositif de classification ou de filtration avec au moins deux dispositifs selon l'une des revendications précédentes, **caractérisé en ce que** le tuyau de décharge d'un des dispositifs est connecté au tuyau d'alimentation du, au moins, deuxième dispositif monté en aval, et dont le diamètre effectif des perforations des aires filtrantes ou classifiantes est plus petit dans le dispositif en aval que dans le dispositif qui le précède.
